Europäisches Patentamt

European Patent Office

Office européen des brevets

(11) Publication number: **0 330 398**
A2

# (12) EUROPEAN PATENT APPLICATION

(21) Application number: **89301606.3**

(22) Date of filing: **20.02.89**

(51) Int. Cl.⁴ **G11B 5/17 , G11B 5/33**

(30) Priority: **24.02.88 US 159878**

(43) Date of publication of application:
**30.08.89 Bulletin 89/35**

(84) Designated Contracting States:
**DE FR GB**

(71) Applicant: **MAGNETIC PERIPHERALS INC.**
**12501 Whitewater Drive**
**Minnetonka Minnesota 55343(US)**

(72) Inventor: **Wilcox, Lawrence Allen**
**722 North Canadian Terr**
**Mustang Oklahoma 73064(US)**

(74) Representative: **Caro, William Egerton et al**
**J. MILLER & CO. Lincoln House 296-302 High**
**Holborn**
**London WC1V 7JH(GB)**

(54) **Magnetic read head.**

(57) A read head for a magnetic disk drive comprises
an active thin film transducer (12, 41) and an inactive
thin film transducer (11, 42). The transducers have
oppositely coiled coils (21), which are arranged so
as to generate, in use, a read signal for output from
which ambient noise is substantially eliminated. The
coil leads (13, 14; 43, 44) are electrically connected
to one another, and the inactive transducer (11, 42)
is set back from a read surface (25) of the head by a
distance such that the reading level by the inactive
transducer of the magnetically encoded data on a
disk surface, in use, not measurably greater than
ambient noise levels. The head may be employed in
a data storage device, which comprises a plurality of
disks (71, 72, 74) coated with magnetic media and
mounted at spaced locations on a spindle (70). The
head has particular application for reading servo
information on one of the disks (71) dedicated to
servo information, such disk being the central disk
on the spindle.

Fig. 1

Fig. 3

## MAGNETIC READ HEAD

This invention relates to read and read/write heads for use in magnetic disk drives and has particular application to such heads for reading servo information from magnetic disks.

In the field of high density magnetic storage, the primary means for storing data is on surfaces of circular platters or disks, which have been coated with magnetic media. A plurality of disks are usually mounted, centered and spaced apart, on a spindle. The spindle is most often mounted in a housing by means of a single bearing. Due to this structure, the spindle will not rotate without wobble, and the extent of the wobble will vary with temperature, age, and numerous other known or presumed variables. Thus, the further a disk is mounted from the bearing, the greater its undesirable movement will be.

Magnetic transducers for reading and writing data to and from the disks are mounted in or on heads provided on a comb shaped structure, which serves to hold the transducers at appropriate locations between the disks. The "teeth" of the structure are called head arms and the "comb" is called a head arm assembly. The heads carrying the transducers are at the ends of the head arms.

The transducers are thus all arranged in a plane, no matter where they are radially relative to a respective disk, and by dedicating one transducer (a servo transducer) to reading servo tracks (the reading of which indicates the relative or absolute radial location of that transducer) a very accurate indication of the radial location of all the transducers can be obtained. Unfortunately, the disk furthest from the bearing will experience a greater degree of wobble than the one nearest the bearing. Thus, if the servo tracks are provided on the disk nearest the bearing, they may be very narrowly spaced apart but such resolution is progressively, and unpredictably to some extent, lost as you move to disks successively further from the bearing. So, the servo tracks provide the best overall prediction of transducer-to-track correspondence (across all the disks on the spindle) if they are on the central disk.

While the resolution cannot then in theory be as fine as if the servo tracks are on a disk at the bearing end of the spindle, it is much better than having the servo tracks on a disk at the far end of the spindle. In practice, however, if the servo tracks are on a disk at the bearing end of the spindle, the number of servo tracks is still limited by the greatest possible degree of wobble experienced by the disks at the far end of the spindle.

In other words, the best location for a servo disk is where the relative displacement between the servo transducer following the servo track and the transducer furthest from the servo transducer is smallest, i.e. the best location is at the centre of the spindle. Thus, the relative displacement between the servo transducer and each of the transducers following tracks on disks at either end of the spindle is equal.

However, where a central disk is used for the servo track, cross talk problems are encountered and, because no satisfactory way has been found to ameliorate cross talk, known disk drives have heretofore been built with the servo disk on one end of the spindle, usually the bearing end.

Cross talk can occur for several reasons, for example from other transducers which are writing whilst the servo transducer is reading, or between the wires which transmit the data picked up by the transducers when these wires are adjacent to one another.

Various ways of eliminating cross talk have been proposed, including putting the servo transducer on an arm apart from the head arm assembly, or, as is commonly done, putting the servo track on the last disk at the bearing end of the spindle and dedicating the associated arm to the servo transducer alone (usually each arm carries two heads, and therefore two transducers).

It has also been proposed to provide a transducer in the form of a coil, which is somehow inactive, to cancel some of the problems of cross talk. For example, U.S. Patent No. 4,008,493 discloses the use of transducers comprising two coils of opposite polarity, in order to cancel noise. The two coils are in the same head and are arranged to cancel cross talk derived from the same media. Figures 4, 8 and 9 of this patent show that the inactive transducer rides away from the media during use.

U.S. Patent No. 4,291,352 is concerned with reducing surface leakage flux induced cross talk between channels in a multi-channel read head of a tape drive.

Neither U.S. Patent No. 4,008,493 nor U.S. Patent No. 4,291,352 addresses the problem of cross talk generated by a radiated field produced by a transducer writing on a disk adjacent to a servo transducer and its associated disk.

U.S. Patent No. 3,959,824 proposes the use of a shield of metal between a write transducer and a read transducer, along with a pair of oppositely wound coils to cancel write-generated noise.

Additional designs for reducing tape transducer cross talk are shown in U.S. Patents Nos. 3,585,314, 3,287,713 and 4,369,476.

U.S. Patent No. 4,245,268 shows the use of specially shaped coil and core structures in a transducer to cancel radiated field noise. The location of the coil in this instance appears to be critical.

U.S. Patent No. 4,184,631 applies to magneto-resistive sensors, but it includes a compensating magneto-resistive element. It is useful in the check reading art.

According to a first aspect of the present invention, there is provided a read head for a magnetic disk drive comprising an active transducer and an inactive transducer, characterised in that the transducers comprise oppositely wound coils arranged so as to generate, in use, a read signal for output from which ambient noise is substantially eliminated.

In the preferred embodiment, thin film transducers are employed and are arranged as mirror images of one another with their coils being electrically connected. For example, the top and bottom of one coil may be connected to the top and bottom, respectively, of the other coil.

Preferably, each transducer comprises a double wound coil, but this is not essential.

According to another aspect of the invention, there is provided a data storage device comprising a plurality of disks coated with magnetic media, the disks being mounted at spaced locations on a spindle and one of the disks being dedicated to servo information, characterised in that a read head for reading the servo information comprises an active transducer and an inactive transducer, and in that the transducers comprise oppositely wound coils arranged so as to generate, in use, a read signal for output from which ambient noise is substantially eliminated.

As described below, the present invention, by alleviating the problem of cross talk, allows the servo information to be provided on the central disk on the spindle and so increased track density is possible.

In one embodiment, the head for reading the servo information is provided on a dedicated support arm. In another embodiment, the head for reading the servo information is mounted on the same arm of a head arm assembly as a further read/write head.

The invention is described further, by way of example, with reference to the accompanying drawings, in which:-

Figure 1 is a perspective view of a first head or flyer, which carries two transducers;

Figure 2 is a view towards a rear end of the head, showing a single one of the transducers with a part of the transducer removed to reveal a coil and other details;

Figure 3 is a sectional view through the transducer taken along the line 3 - 3 in Figure 2;

Figure 4 is a rear view of a further head carrying two transducers;

Figure 5 is a schematic view of parts of a disk drive incorporating the head shown in Figure 4; and

Figures 6a to 6g are sequential views illustrating seven stages in the production of the head shown in Figure 4.

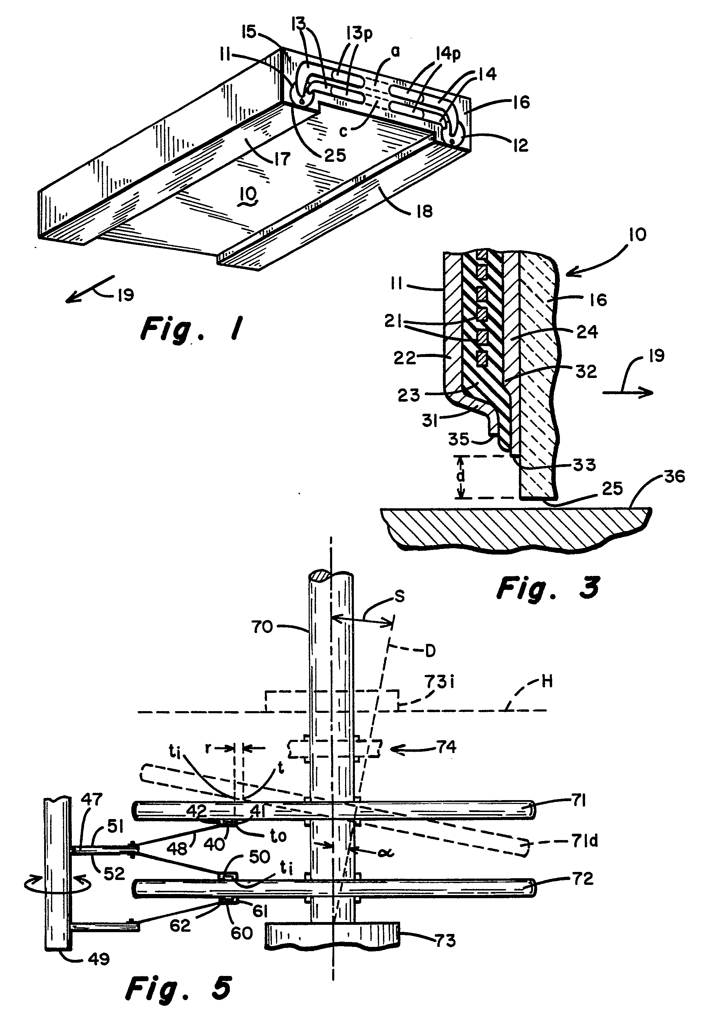

Referring first to Figure 1, a head or flyer, designated by the numeral 10, is shown. The body of the head 10 is made of a material such as alsimag (a nickel-aluminium alloy) and is usually shaped to "fly" in the direction of the arrow 19 over a magnetic disk, with skis 17 and 18 spaced just above the surface of the disk. A trailing or rear end 15 of the head 10 carries transducers 11, 12 for reading from and/or writing on the magnetic media of the disk being flown over (not shown). Only one of the transducers is functional, this one being connected to circuitry for supplying electric current or voltage through leads 13 or 14, connected to associated pads 13p or 14p respectively. An insulating layer 16 is formed between the transducers 11 and 12 and the end 15 of the head 10.

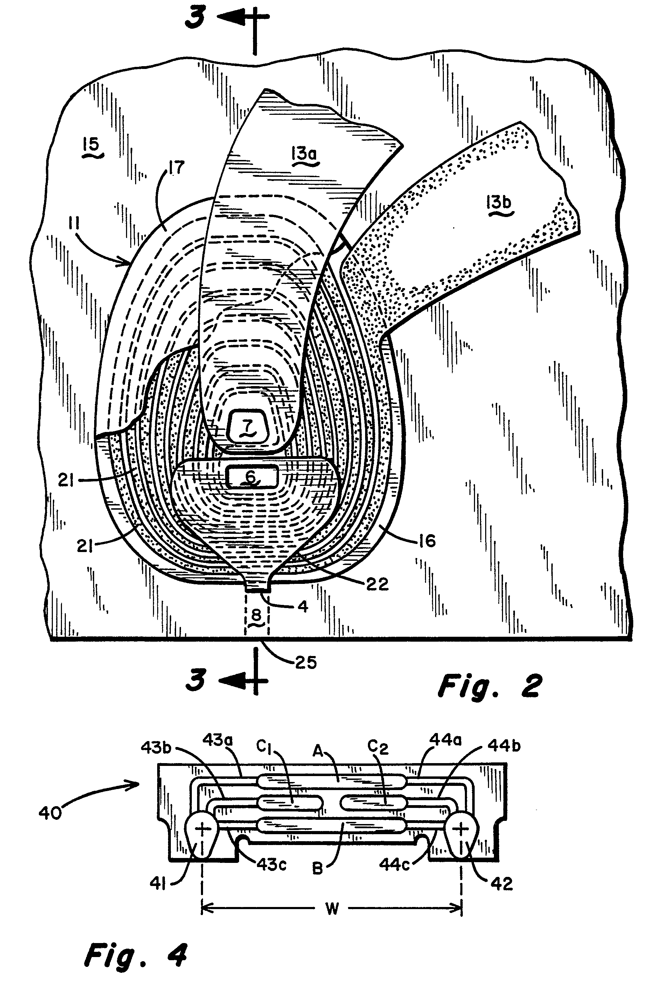

In the prior art, the pads would be disconnected but, as shown by the dotted line pairs a and c, the pads are continuous so that the leads $\overline{13}$ and $\overline{14}$ are connected. The connection will be described in greater detail with reference to the head shown in Figure 4.

Referring now to Figure 2, the transducer 11 is shown in greater detail with the insulating layer 16 shown removed from the head end 15 except under a coil 21 of the transducer. A further insulating layer 16a, which covers the coil 21, is partially removed also. The numerals 13a and 13b designate the tips of the leads 13 shown in Figure 1. The coil 21 is connected to the lead 13a by a connector 7, which extends through the insulating layer 16a and which is made of an electrically conductive material such as copper or gold, for example. An upper part 22 of a core is connected to a lower part 24 (shown in Figure 3 and described below) by another connector 6, this being made of a magnetically conductive material such as alsimag.

A pair of dotted lines outline a region 8 where, in an inactive transducer as shown here, the core parts 22, 24 do not extend. In the case of an active transducer, this region 8 would bear continuations of the core parts 22 and 24 extending to a read surface or flying surface 25 of the head 10. In the present instance, with the region 8 shown unfilled, the core parts 22, 24 are too far from the read surface 25 to read the media. The distance from an extremity 4 of the core part 22 to the read surface 25 can be anywhere from 0.25 mils (0.00635 mm) to whatever the practical limit for physical placement of the transducer is. The relevant consideration for deciding on this distance is whether, in the data storage device in which the head 10 will be used, the inactive transducer will be able to pick up the data on the associated disk at a level greater than that of ambient noise. Through experimentation, this distance has been found to be about 500 micro-inches or one half mil (0.0127 mm) where the region 8 (along with the underlying materials which make up the rear end 15 of the head 10 and the insulating layer 16) is originally laid down with continuous core parts 22, 24, which are then removed by lapping. As an alternative and in the preferred embodiment, however, the region 8 is simply not laid down when the transducer 11 is created. In this instance, the distance between the extremity 4 of the core part 22 and the read surface 25 has been found advantageously to be between 4 and 7 mils (0.102 mm and 0.178 mm), although some variation is possible and a distance of one half mil (0.0127 mm) would be acceptable.

At a flying height (distance of the read or flying surface 25 from the media) of roughly 6 to 12 micro-inches 0.000152 mm to 0.000304 mm), and with a gap of roughly 40 micro-inches (0.00102 mm) between the extremity 4 and the read surface 25, the available write field stength which can be applied to the disk from this transducer will be lowered from 3000 oe to less than 30 oe and the read back or pick up level from the disk will be reduced from 500 micro-volts to less than 10 micro-volts. Such a transducer is thus made to be "inactive".

In Figure 3, the rear end 15 of the head 10 is shown cushioned on an air bearing between the read surface 25 and a disk surface 36, moving, relative to the disk, in the direction indicated by the arrow 19. In this sectional view, the coil 21 can be seen, electrically insulated from the two parts 22 and 24 of the core by an insulator 23 (preferably formed from alumina although other materials will do). The whole transducer 11 is electrically isolated from the remainder of the head 10 by the insulating layer 16. It may be noted that the tips 31 and 32 of the core parts 22 and 24 are thinner than the remainder of these parts.

In this sectional view, the transducer 11 is formed· to be set back from the read surface by displacement, and not by lapping. If it were set back by lapping, a section of the surface 25 would be level with a surface 33 at the extremity of the pole tip 32 and with a surface 35 at the extremity of the pole tip 31. Also, in the case of lapping, the section of the surface 25 in the area of the inactive transducer 11 would be further from the disk surface 36 than the rest of the surface 25: as described above, roughly 500 micro-inches (0.0127 mm) as opposed to 6 to 12 micro-inches (0.000152 mm to 0.000305 mm) for the bulk of the flyer.

In Figure 3, however, the transducer is set back or "displaced" when it is manufactured, without the extra process of lapping. Thus, the first grown or plated core part 24 including the pole tip 32 must be laid down to extend further than the upper core part 22 and pole tip 31, in order that the extremity of the pole tip 31 is a known distance from the pole tip 32. This is not necessary when lapping is employed, because both are formed to extend to the surface 25 and are then set back by the lapping so that the pre-lapped ends need not be at a set gap height from each other.

Referring now to Figure 4, a rear end 45 of a head or flyer 40 is shown, carrying an active transducer 41 and an inactive transducer 42. Note that this head 40 has a different lead and pad structure from the head 10 of Figure 1. In this instance, there are three lead pairs (a, b and c), labelled 43a and 44a, 43b and 44b, 43c and 44c, while in Figure 1 there are only two connected by dotted line pairs a and c. The inclusion of the extra lead pair 43b, 44b is shown here to illustrate the preferred form of the invention, in which each transducer comprises a double wound coil having a centre tap connected to pads C1 or C2 by the lead 43b or 44b respectively.

The invention also applies to the single coil transducers described above, so long as the winding of the active transducer is a mirror image of (i.e. reverse wound from) the winding of the inactive transducer.

With the arrangement of the invention, the ambient signal received by both coils will be the same but the signal output from the coil leads, say 43, to the connected pads A and B will be 180° out of phase from that output from the mirror image wound coil from the coil leads, say 44. Thus, the only signal produced by the electrically connected pair is the data signal received by the active transducer. Of course, the wires which transmit this signal along a head arm on which the head is mounted will be bonded in electrical connection with these pads A and B. (In the preferred embodiment, the active transducer will also have a lead wire bonded to its pad C, to enable the active transducer to write as well as read). The distance w between the centres of the transducers in the preferred embodiment is approximately 115 mils (2.921 mm).

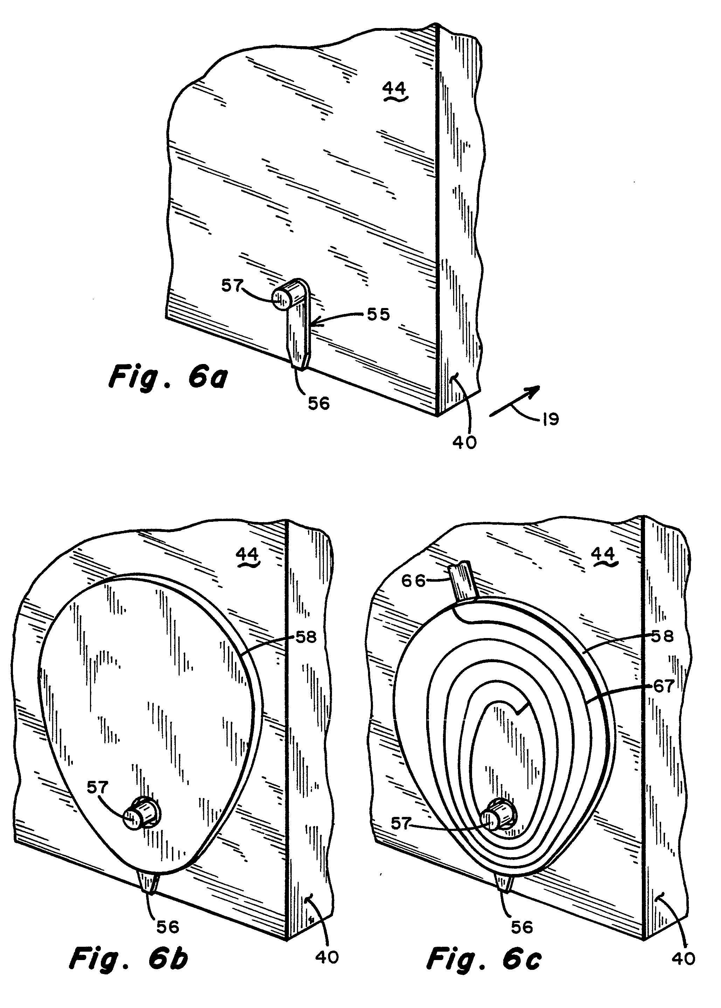

Referring now to Figure 6a, the first step in plating the active transducer on the head 40 is shown. In the preferred embodiment, the inactive transducer is produced in the same way except that it is produced higher up on the illustrated surface 44 (on which an insulating layer, not shown, isolates the transducer from the remainder of the head 40). The orientation of the head 40 is shown by the arrow 19, which indicates the future movement of the head 40 relative to a disk surface. In this first step, a lower pole piece 55, formed with a narrowed tip 56 and a connector 57 (roughly corresponding to the connector 6 of Figure 2) is laid on the surface 44.

Figure 6b shows the formation of the next layer which is a conductive metal plate 58 for providing the coil. In the preferred embodiment, the coil plate 58 is made from copper but other conductive materials are also suitable. A lead 66 is produced from the coil plate 58 for connection to the lead 44c shown in Figure 4.

Referring to Figure 6c, the coil shape is next etched as a groove 67 in the plate 58.

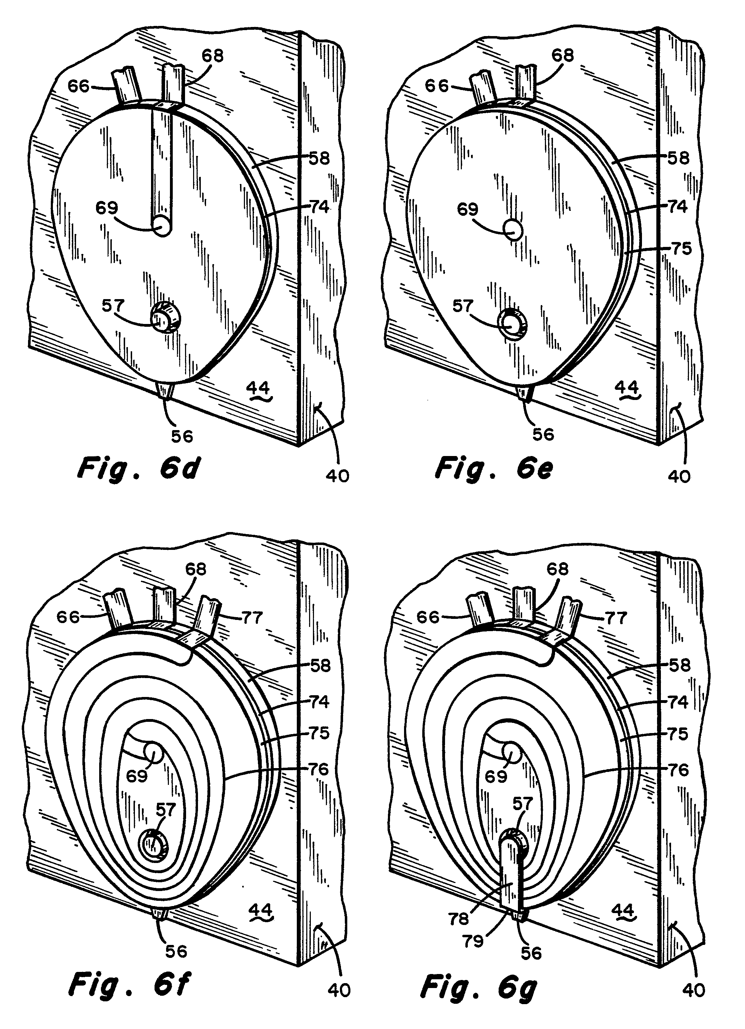

Following this, as shown in Figure 6d, a layer of insulating material 74 (preferably although not necessarily made of alumina) is laid over the coil plate 58 and into the groove 67, leaving a central region 69 uncoated. In this central region 69 and along a path, which is insulated from the coil plate 58 by the material 74, a lead 68 is laid for connection as a centre tap in the preferred embodiment. The lead 68 may be used for writing and is not relevant to this invention. Another layer of insulating material 74 is then laid over the entire surface except for the areas occupied by the connector 57 and the region 69.

Referring to Figure 6e, a further coil place 75 is now laid atop the insulating material 74 (which contains the centre tap to the lead 68). The coils are connected through the region 69.

As shown in Figure 6f, the coil plate 75 is then etched with grooves 76 to form a coil, and a conductive lead 77 is laid down.

In Figure 6g, the transducer is shown nearly complete apart from an insulating layer on the coil formed from the plate 75. A top pole piece 78 with a pole tip 79 has been laid over the coil formed from the plate 75.

As illustrated, if the lead 66 is considered to be the input lead, the coil can be said to be wound clockwise. Accordingly, if this is the active transducer, the inactive transducer must be wound counter-clockwise to perform the required function. The coil in the active transducer is thus a mirror image of, or oppositely coiled from, the coil in the inactive transducer.

Turning now to Figure 5, the head 40 is shown mounted by means of a spring arm 48 on a head arm 47, which is connected to a rotatable axle 49. Other heads 50, 60 are mounted on other head arms also attached to the axle 49. Rotation of the axle 49 moves the heads 40, 50, 60 radially across adjacent surfaces of respective disks 71, 72 mounted on a spindle 70. The axle 49, head arms, spring arms and heards constitute a head arm assembly. In this Figure, only a small portion of the overall storage device is shown. In practice, numerous disks will be mounted on the spindle 70. For the purposes of this discussion, it can be assumed that the disk 71 is a centrally located disk, in other words that a third disk (such as the partially illustrated disk 74) is mounted above it on the spindle 60, while the disk 72 is mounted below it on the spindle 70. The spindle 70 is supported at one end by means of a bearing 73. In fact, a further bearing 73i may also be provided at the other end of the spindle to lend some added stability to the spindle.

In the preferred embodiment, bearings are provided at both ends of the spindle, and therefore the centrally located disk is most likely to experience the least wobble and thermal drift. This disk 71 carries a servo track and the head 40, which is the centrally located head, acts as a servo head. The distance between the transducers of the head 40 and the servo track is a constant because the servo head follows the servo track. The wobbling of the outer disks causes the transducer-to-track distance to be greater or less, depending on the current position of the disk relative to the associated heads. Therefore, the greater the distance of a disk from the central disk, the greater the margin of error that has to be taken into account in designing track spacing. Since the axis of a wobble would be through a point approximately mid-way between the bearings, if the servo track were on a disk at one end of the spindle, the effect of the wobble on the relative motion between a head and a disk at the far end of the spindle would be doubled. In Figure 5, the bearing 73i is shown connected to an inner housing wall H and the disk 71 is located midway between the bearings 73, 73i.

In the following description, however, the bearing 73i can be ignored and it can be assumed that the bearing 73i is absent.

To show that the track densities achievable with this invention are substantially greater than those available where the servo track is on the disk closest to the bearing 73, a centre line CL and a displaced line D are shown, diverging at an angle $\alpha$ and yielding a displacement s. The corresponding displacement of a track $t_o$ on the disk 71 is shown as r, where the disk is shown displaced to the position 71d and the track $t_o$ is shown displaced from an original location $t_i$ to a new location $t_w$, which is not in line vertically with the original location $t_i$. For a disk closer to the bearing 73, the displacement of a track from the corresponding location $t_i$ will be less than r and, for a disk further from the bearing 73, the displacement of a track from the corresponding location $t_i$ will be greater than r. These locations designated by $t_i$ are the track locales readable or writable by the relevant transducer associated with that disk surface. Thus, if a transducer 61 were the servo transducer, the transducer 41 would read data from the track $t_o$ at the location $t_i$ until displacement (wobble) was introduced. At that time, the transducer 41 would be biased by the spring 48 to a point very nearly vertically in line with the location $t_i$, when it ought to be following the track $t_o$. Therefore, since it is known that the displacement of the track $t_o$ is about r, the spacing between the tracks on the disk 71 would have to be something greater than r to avoid errors in track reading. Moving to consideration of the next transducer and disk away from the bearing 73, the relative displacement would be even greater, causing an ever greater requirement for wide track spacing. (Due to the exaggeration of the drawing, the disks 71, 72 are shown less wide and the arms 47 are shown shorter than they would be in practice, and the wobble angle α is shown greater).

On the other hand, if the transducer 41 is the servo transducer, it will follow the track $t_o$ closely and the relative displacement between the transducer 61 and the location $t_i$ will be equal to that of the corresponding transducer associated with the disk 74. Thus, it can be seen why the use of the central disk for the servo track is useful.

In the case of the preferred embodiment, where there are bearings at both ends of the spindle, the efficacy of a centrally located disk for the servo track is even greater. The centre of the wobble axis will probably be approximately midway between the bearings, and the relative displacement between transducer and track will be less the nearer a disk is located to the centre of the spindle.

A further problem of cross talk may also arise by virtue of the fact that the wires connecting the leads from the servo head to its read circuit and the wires connecting corresponding leads from another head on the same arm to its read/write circuit are in proximity, causing a capacitive coupling. This additional problem can be reduced or eliminated by putting the wires on opposite sides of the arm which supports both heads. If desired, additional insulating material may be made part of the arm and may be located between the leads from the two heads. Of course, this problem will not arise in the event that the servo head is attached to an arm dedicated for its use alone.

The present invention thus alleviates the problem of cross talk and enables a disk drive to be produced with a central disk employed for the servo track, and this is a significant advance over the prior art.

## Claims

1. A read head for a magnetic disk drive comprising an active transducer (12, 41) and an inactive transducer (11, 42), characterised in that the transducers comprise oppositely wound coils (21) arranged so as to generate, in use, a read signal for output from which ambient noise is substantially eliminated.

2. A head according to claim 1, characterised in that the oppositely wound coils are electrically connected to one another.

3. A head according to claim 1 or 2, characterised in that the inactive transducer is set back from a read surface (25) of the read head by a distance such that the reading level by the inactive transducer, in use, is not measurably greater than ambient noise levels.

4. A head according to claim 3, characterised in that the inactive transducer is set back from the read surface by displacement.

5. A head according to claim 4, characterised in that the distance by which the inactive transducer is set back from the read surface is from 4 to 7 mils (0.102 mm to 0.178 mm).

6. A head according to any of claims 1 to 3, characterised in that the inactive transducer is set back from the read surface by lapping.

7. A head according to claim 6, characterised in that the distance by which the inactive transducer is set back from the read surface is at least one quarter mil (0.00635 mm).

8. A head according to claim 7, characterised in that the distance by which the inactive transducer is set back from the read surface is approximately one half mil (0.0127 mm).

9. A head according to any preceding claim, characterised in that the distance between the active transducer and the inactive transducer is substantially 115 mils (2.921 mm).

10. A flyer for magnetic disk media having both an active and an inactive thin film transducer (11, 12; 41, 42), characterised in that the transducers have oppositely coiled coils (21), and in that the inactive transducer is set back from the flying surface (25) a sufficient distance such that the reading level by the inactive transducer of the magnetically encoded data on the media surface over which it flys in use is not measurably greater than ambient noise levels.

11. A data storage device comprising a plurality of disks (71, 72, 74) coated with magnetic media, the disks being mounted at spaced locations on a spindle (70) and one of the disks (71) being dedicated to servo information, characterised in that a read head (40) for reading the servo information comprises an active transducer (12, 41) and an inactive transducer (11, 42), and in that the transducers comprise oppositely wound coils (21) arranged so as to generate, in use, a read signal for output from which ambient noise is substantially eliminated.

12. A device according to claim 11, characterised in that the dedicated disk (71) is the central disk on the spindle.

13. A device according to claim 11 or 12, characterised in that the disks on the spindle are mounted between spindle bearings (73, 73i).

14. A device according to claim 11 or 12, characterised in that the disks on the spindle are mounted on one side of a single spindle bearing (73).

15. A device according to any of claims 11 to 14, characterised in that the read head for reading the servo information is attached to an arm (47) of a head arm assembly (47, 49) and is the only read head attached to the arm.

16. A device according to any of claims 11 to 14 characterised in that the read head for reading the servo information and a further read head (50) for reading data are attached to an arm (47) of a head arm assembly, and in that leads from the read head for reading the servo information are disposed on an opposite side of the arm from leads for the read head for reading the data.

17. A device according to claim 16, characterised in that additional insulating material is provided between the leads on the opposite sides of the arm.

18. A data storage device comprising a plurality of disks (71, 72, 74) coated with magnetic media, spaced apart and mounted on a spindle (70), one of the disks (71) being dedicated to servo information, characterised in that the flyer (40) for reading the servo information has an inactive transducer (11, 42) and an active transducer (12, 41) thereon.

**Fig. 1**

**Fig. 3**

**Fig. 5**

Fig. 2

Fig. 4

Fig. 6a

Fig. 6b

Fig. 6c

Fig. 6d

Fig. 6e

Fig. 6f

Fig. 6g